# EUROPÄISCHE PATENTSCHRIFT

(11) **EP 2 834 898 B1**
(45) Veröffentlichungstag und Bekanntmachung des Hinweises auf die Patenterteilung: **04.09.2019**
(21) Anmeldenummer: 13714598.3
(22) Anmeldetag: 27.03.2013
(51) Int. Cl.: H02J 3/00

(54) **VERFAHREN ZUR BESTIMMUNG VON MESSSTELLEN IN NIEDERSPANNUNGSNETZEN UND NETZMANAGEMENTSUBSYSTEM ZUR DURCHFÜHRUNG DES VERFAHRENS.**
METHOD FOR DETERMINING MEASURING POINTS IN LOW-VOLTAGE NETWORKS, AND NETWORK MANAGEMENT SUBSYSTEM FOR CARRYING OUT THE METHOD
PROCÉDÉ DE DÉTERMINATION DE POINTS DE MESURE DANS DES RÉSEAUX À BASSE TENSION ET SOUS-SYSTÈME DE GESTION DE RÉSEAU SERVANT À METTRE EN OEUVRE CE PROCÉDÉ

(30) Priorität: 02.04.2012 AT 501162012
(43) Veröffentlichungstag der Anmeldung: 11.02.2015
(73) Patentinhaber: Siemens Aktiengesellschaft, 80333 München (DE)
(72) Erfinder: EINFALT, Alfred, A-1210 Wien (AT); DEUTSCH, Tobias, A-1040 Wien (AT); LUGMAIER, Andreas, A-1140 Wien (AT); MOSSHAMMER, Ralf, A-1020 Wien (AT)
(74) Vertreter: Maier, Daniel Oliver
(86) Internationale Anmeldenummer: PCT/EP2013/056489
(87) Internationale Veröffentlichungsnummer: WO 2013/149899

(56) Entgegenhaltungen:
- DE-A1- 4 323 432
- US-A1- 2012 078 436

## Beschreibung

Verfahren zur Bestimmung von Messstellen in Niederspannungsnetzen und Netzmanagementsubsystem zur Durchführung des Verfahrens.

Die Erfindung betrifft ein Verfahren zur Bestimmung von Messstellen in Niederspannungsnetzen, sowie ein Netzmanagementsystem zur Durchführung des Verfahrens.

Der Übergang von herkömmlichen Stromnetzen mit zentraler Stromerzeugung in leistungsfähigen Kraftwerken mit hoher Verfügbarkeit zu Netzen mit dezentraler Stromerzeugung, insbesondere auf Basis sogenannter erneuerbarer Energie wie beispielsweise mit Photovoltaik-, Windkraft- oder Biogasanlagen erfordert leistungsfähige Netzmanagementsysteme Wesentliches Element dieser Managementsysteme sind entsprechende Messgeräte, wie beispielsweise intelligente Zähler (Smart Meter) und die Auswahl geeigneter Messstellen an denen die Messgeräte positioniert sind.

Dies insbesondere auch deswegen, weil die Installation von Messgeräten erhebliche Kosten verursacht.

Auch wenn bereits vorhandene intelligente Zähler als Messgeräte genutzt werden und damit kein zusätzlicher Installationsaufwand entsteht, muss aufgrund der in Niederspannungsnetzen üblichen schmalbandigen Übertragungskanäle das Datenvolumen möglichst gering gehalten werden, da nur so die Messwerte zeitnah erhalten werden können und eine Auswertung mit vertretbarem Aufwand möglich ist.

US2012/0078436 A1 offenbart ein neuronales Netz zur Analyse eines Energieversorgungsnetzes, was zur Reduktion der Zahl der Eingabeparameter eine aus US 7,788,051 bekannte Technik anwendet.

Der Erfindung liegt daher die Aufgabe zugrunde, ein Verfahren anzugeben, mit dem die Auswahl geeigneter Messstellen automatisiert möglich ist.

Erfindungsgemäß geschieht dies mit einem Verfahren nach unabhängigem Anspruch 1.

Das erfindungsgemäße Verfahren erlaubt eine automatisierte Messstellenauswahl, wodurch die Aufwände bei der grundlegenden Auswahl und in der Folge auch bei notwendigen Änderungen durch Zubau bzw. Umschaltungen am Niederspannungsnetz reduziert werden können.

Dabei kann auch auf "Sicherheitsreserven", d.h. zusätzliche Messstellen zum Abdecken einer großen Bandbreite möglicher Netzzustände verzichtet werden.

Die geringere Anzahl notwendiger Messstellen reduziert in der Folge die Menge der zu übertragenden Daten, wodurch bei gleichbleibender Übertragungskapazität des Niederspannungsnetzes die Zahl der Abfragen der Messstellen gesteigert und damit die Reaktionszeit eines Netzmanagementsystems auf Veränderungen im Niederspannungsnetz verkürzt werden kann.

Das erfindungsgemäße Verfahren wird in vorteilhafter Weise ausgeführt mit einem Netzmanagementsubsystem, welches eine Komponente zur Bestimmung von Messstellen, eine Datenbank, sowie Mittel zur Abfrage der Messwerte aufweist.

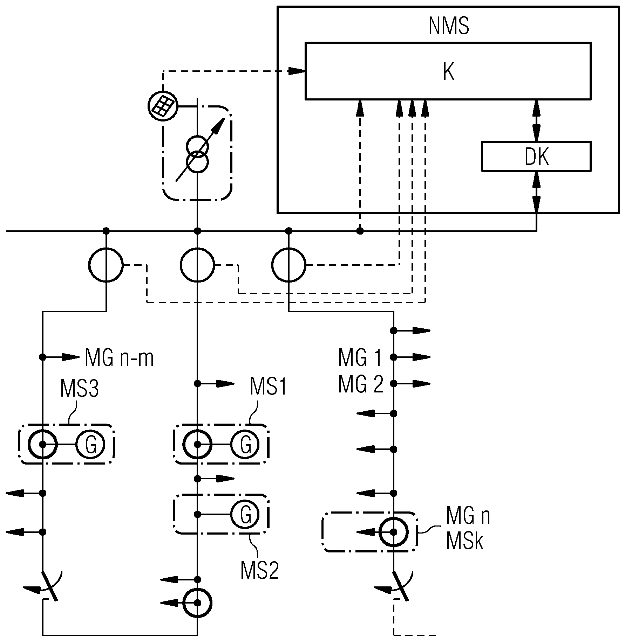

Die Erfindung wird anhand eines in der Figur dargestellten Ausführungsbeispieles näher erläutert.

Das erfindungsgemäße Verfahren umfasst im Kern einen selbstlernenden Algorithmus der auf Basis von in einer Datenbank erfassten, historischen und aktuellen Messwerten die automatisierte und dezentralisierte Auswahl von Messstellen MS1,MS 2,... MS k ermöglicht.

Der Algorithmus selbst basiert auf mathematischen Methoden der Regression und/oder neuronaler Netze.

In einem ersten Verfahrensschritt werden in einer Datenbank Messwerte von im Niederspannungsnetz vorhandenen Messgeräten MG1, MG2,... MG n zusammen mit zeitlichen Informationen dazu erfasst.

Die Messwerte können beispielsweise Strom- und Spannungsmessdaten der Verbraucher umfassen, die mit (vorhandenen) intelligenten Zählern kostengünstig ermittelt werden können, sowie Strom- und Spannungsmessdaten an ausgewählten, signifikanten Netzelementen wie Knoten oder Strängen. Wenn das Niederspannungsnetz Stromerzeugungsanlagen mit hoher Volatilität der Einspeisung aufweist, wie beispielsweise Photovoltaik oder Windkraftanlagen ist es oftmals vorteilhaft, auch Daten zu erfassen, welche die Einspeisung prägen, so zum Beispiel die aktuelle Sonneneinstrahlung oder Windgeschwindigkeiten.

Soweit keine aktuellen Daten gefordert sind, kann eine Zwischenspeicherung der Daten an den Messstellen, beispielsweise in Datenpuffern intelligenter Zähler erfolgen und die Übermittlung an die Datenbank in Zeiten niedriger Belastung des Übertragungssystems geschehen.

Spannungsmesswerte sind dabei besonders für Niederspannungsnetze in ländlichen Gebieten, Strommessdaten für Niederspannungsnetze in urbanen Gebieten aussagekräftig.

Dabei ist es auch wesentlich, dass mit geeigneten Mittelungsverfahren die unregelmäßig eintreffenden bzw. zum Teil fehlenden Daten aufbereitet und mit Zeitinformationen versehen werden.

Die Auswahl der für die Messdatenerfassung am besten geeigneten Messstellen MS1,MS 2,... MS k , bzw. der an diesen Stellen befindlichen Messgeräte MG1, MG2,... MG n erfolgt durch Auswertung der gespeicherten Daten mit einem selbstlernender Algorithmus wie beispielsweise einem neuronalen Netz oder Methoden der Regression.

Diese Auswahl ist abhängig von den Belastungszuständen des Netzes, die in Belastungsszenarien beschrieben werden.

So ist die Netzbelastung an einem Wochenende in typischer Weise geprägt durch privaten Verbrauch, während an Arbeitstagen Industrie und Gewerbe maßgebliche Belastungen verursachen.

Weiterhin sind jahreszeitliche Schwankungen beispielsweise aufgrund der unterschiedlichen Tageslängen und des Heiz- bzw. Kühlbedarfes zu berücksichtigen.

Schließlich sind auch kurzfristige Tageslastverläufe zu beachten, die aber in ihrer Ausprägung von den langfristigen Szenarien abhängen. So ist beispielsweise an Winterwochenenden die Belastungsspitze zu Mittag durch das Kochen besonders stark ausgeprägt.

Berücksichtigt werden müssen auch mögliche Veränderungen an der Netztopologie, beispielsweise durch Ausfall eines Knotens, oder aber durch Umbauarbeiten am Niederspannungsnetz.

Diesen unterschiedlichen Belastungsszenarien werden erfindungsgemäß jeweils Messgeräte MG1, MG2,... MG n mit besonders aussagekräftigen Messwerten zugeordnet und als Messstellen MS1,MS 2,... MS k festgelegt werden.

Dabei wird darauf geachtet, dass die Anzahl der Messstellen MS1,MS 2,... MS k ein Optimum hinsichtlich der zu übertragenden Daten und der Aussagekraft über das Niederspannungsnetz darstellt, d.h. dass mit möglichst wenigen Messstellen MS1,MS 2,... MS k das Netzverhalten möglichst genau erfasst wird.

Zur Bestimmung der Messgeräte mit besonders aussagekräftigen Daten bzw. der Messstellen MS1,MS 2,... MS k werden aufgrund der historischen Werte aus der Datenbank die Knoten im Netz ermittelt, an denen die Strom- bzw. Spannungsmesswerte mit entsprechender Häufigkeit überdurchschnittlich hohe bzw. geringe Werte aufweisen. Dazu werden über geeignete statistische Verfahren entsprechende Wahrscheinlichkeitsverteilungen gebildet und zur Ergebnisfindung verwendet.

Diese Bestimmung erfolgt für und in Abhängigkeit von den Belastungsszenarien, die Wahl der Messstellen MS1,MS 2,... MS k kann an einem Winterwochenende also anders aussehen, als an einem Arbeitstag im Frühsommer.

Die Dauer und Auswahl der Belastungsszenarien ist ebenfalls von den Netzanforderungen abhängig. In vielen Fällen wird es ausreichen, wenn die Belastungsszenarien die jahreszeitlichen Schwankungen abdecken, bei stark belasteten Niederspannungsnetzen mit großen Schwankungen wird es zweckmäßig sein, kurzfristige Belastungsszenarien, ggf. für die Dauer von wenigen Stunden zu definieren. Darüber hinaus ist es auch zweckmäßig, kritische Situation wie beispielsweise Ausfälle von Netzelementen oder Umschaltungen mit eigenen Belastungsszenarien und einer entsprechenden Auswahl von Messstellen MS1,MS 2,... MS k abzudecken.

Durch Umschaltungen im Netz verändern sich sehr plötzlich und grundlegend die Belastungen. Durch den Vergleich mit historischen Umschaltvorgängen können auch für diese Fälle rasch die geeigneten Messstellen MS1,MS 2,... MS k festgelegt werden.

Das Lastverhalten des Niederspannungsnetzes wird durch Auswertung historischer Daten im Allgemeinen gut beschrieben.

Für die Erfassung des Einflusses dezentraler Stromerzeugungsanlagen mit hoher Volatilität der Einspeisung, wie beispielsweise von Photovoltaik oder Windkraftanlagen ist es oftmals vorteilhaft, auch aktuelle Daten wie beispielsweise die aktuelle Sonneneinstrahlung oder Windmessdaten in die Auswahl der Messstellen MS1,MS 2,... MS k einzubeziehen.

Zur Durchführung des erfindungsgemäßen Verfahrens ist es vorteilhaft, wenn ein Netzmanagementsubsystem NMS eine Komponente K zur Bestimmung von Messstellen MS1,MS 2,... MS k , eine Datenbank, sowie Mittel DK zur Abfrage der Messwerte aufweist.

Das Netzmanagementsubsystem NMS kann dabei zentral in einer Leitstelle oder dezentral beispielsweise in Ortsnetzstationen ausgeführt sein.

Die Dezentralität kann auch virtuell verwirklicht werden, indem mehrere Netzmanagementsubsysteme NMS auf einem einzigen Rechner ablaufen.

Bei einer dezentralen Lösung ist es vorteilhaft, wenn eine hierarchische Organisation vorgesehen ist, wobei die Netzmanagementsubsysteme NMS zu Gruppen zusammengefasst werden und jeder Gruppe von einer Zentraleinheit ein zu überwachender Netzabschnitt mit den zugehörigen Messgeräten MG1, MG2,... MG n zugeordnet wird.

Innerhalb einer Gruppe von Netzmanagementsubsystemen NMS erfolgt eine weitere Aufgabenteilung.

Im Falle einer Datenerfassung mit intelligenten Zählern (Smart Meter) spielt der sogenannte Datenkonzentrator DK des Smart-Metering-Systems als Mittel zur Abfrage der Messwerte eine wesentliche Rolle. Er überwacht die intelligenten Zähler bzw. alle angeschlossenen Geräte über einen Kommunikationskanal wie beispielsweise Powerline A-Band und kommuniziert mit dem jeweils zugeordneten Netzmanagementsubsystem NMS.

Der Schnittstelle zwischen den Netzmanagementsubsystemen NMS und dem zugehörigen Datenkonzentrator DK kommt daher eine besondere Bedeutung zu.

Hier ist eine bidirektionale Schnittstelle vorgesehen, welche eine flexible Auswahl und Parametrierung der ausgewählten Messstellen MS1,MS 2,... MS k ermöglicht.

Diese flexible Parametrierung ist Voraussetzung für Auswahl und damit die Möglichkeit der schnellen Datenabfrage für das aktive Netzmanagement.

### Bezugszeichenliste

- MS1,MS 2,... MS k: Messstellen
- MG1, MG2,... MG n: Messgeräte
- DK: Datenkonzentrator
- NMS: Netzmanagementsubsystem
- K: Komponente zur Bestimmung von Messtellen

## Patentansprüche

1. Verfahren zur Bestimmung von Messstellen in Niederspannungsnetzen mit folgenden, in periodischen Zeitabständen wiederholten Verfahrensschritten:
- in einer Datenbank werden Messwerte von im Niederspannungsnetz vorhandenen Messgeräten (MG1, MG2,... MG n) zusammen mit zeitlichen Informationen dazu erfasst;
- aus den erfassten Daten werden mithilfe selbstlernender Algorithmen jeweils unterschiedliche Belastungsszenarien ermittelt;
- zu den ermittelten, jeweils unterschiedlichen Belastungsszenarien werden jeweils Messgeräte (MG1, MG2,... MG n) mit besonders aussagekräftigen Messwerten bestimmt und diese Messgeräte (MG1, MG2, ..., MG n) als Messstellen (MS1, MS 2,... MS k) für die ermittelten, jeweils unterschiedlichen Belastungsszenarien festgelegt, wobei als Messstellen (MS1, MS2,..., MS k) auf Basis der in der Datenbank erfassten Messwerte Knoten im Niederspannungsnetz ermittelt werden, welche mit einer entsprechenden Häufigkeit überdurchschnittlich hohe und/oder geringe Strom- und/oder Spannungsmesswerte aufweisen.

2. Verfahren nach Anspruch 1 **dadurch gekennzeichnet, dass** als Messgeräte (MG1, MG2, ... MG n) zumindest teilweise intelligente Zähler vorgesehen werden.

3. Netzmanagementsubsystem zur Durchführung des Verfahrens nach Anspruch 1 oder 2, **dadurch gekennzeichnet, dass** zumindest eine Komponente (K) zur Bestimmung von Messstellen, zumindest eine Datenbank, sowie Mittel (DK) zur Abfrage der Messwerte vorgesehen sind.

## Claims

1. Method for determining measuring points in low-voltage networks having the following method steps repeated at periodic time intervals:
- in a database measured values, together with time information, are acquired by measuring devices (MG1, MG2, ..., MG n) present in the low-voltage network;
- different load scenarios are determined from the acquired data with the aid of self-learnt algorithms in each case;
- measuring devices (MG1, MG2, ... MG n) with particularly meaningful measured values are determined relating to the determined, in each case different load scenarios and these measuring devices (MG1, MG2, ... MG n) are defined as measuring points (MS1, MS 2, ... MS k) for the determined, in each case different load scenarios, wherein on the basis of the measured values acquired in the database, nodes in the low-voltage network are determined as measuring points (MS1, MS2, ..., MS k), said nodes having above-average high and/or low current and/or voltage measured values with a corresponding frequency.

2. Method according to claim 1, **characterised in that** at least partially smart meters are provided as measuring devices (MG1, MG2, ...MG n) .

3. Network management subsystem for carrying out the method according to claim 1 or 2, **characterised in that** there is provision for at least one component (K) for determining measuring points, at least one database, and means (DK) for querying the measured values.

## Revendications

1. Procédé de détermination de points de mesure dans des réseaux à basse tension, comprenant les étapes suivantes, répétées à des intervalles périodiques :
- dans une banque de données, des valeurs de mesure d'appareils de mesure (MG1, MG2,..., MG n) présents dans le réseau à basse tension sont acquises, avec des informations temporelles correspondantes ;
- à partir des données acquises, des scénarios de charge à chaque fois différents sont déterminés, à l'aide d'algorithmes à auto-apprentissage ;
- des appareils de mesure (MG1, MG2,..., MG n) donnant des valeurs de mesure particulièrement significatives sont à chaque fois déterminés relativement aux scénarios de charge à chaque fois différents déterminés, et ces appareils de mesure (MG1, MG2,..., MG n) sont définis en tant que points de mesure (MS1, MS2,..., MS k) pour les scénarios de charge à chaque fois différents déterminés, des noeuds du réseau à basse tension étant déterminés en tant que points de mesure (MS1, MS2,..., MS k) sur la base des valeurs de mesure acquises dans la base de données, lesquels noeuds présentent, avec une fréquence correspondante, des valeurs de mesure de courant et/ou de tension exceptionnellement élevées et/ou faibles.

2. Procédé selon la revendication 1, **caractérisé en ce que** des compteurs au moins partiellement intelligents sont prévus en tant qu'appareils de mesure (MG1, MG2,..., MG n) .

3. Sous-système de gestion de réseau servant à mettre en oeuvre le procédé selon la revendication 1 ou 2, **caractérisé en ce qu'**il est prévu au moins un composant (K) permettant de déterminer des points de mesure, au moins une base de données, ainsi qu'un moyen (DK) permettant de consulter les valeurs de mesure.
